# EUROPÄISCHE PATENTSCHRIFT

(11) **EP 2 212 567 B1**
(45) Veröffentlichungstag und Bekanntmachung des Hinweises auf die Patenterteilung: **09.08.2017**
(21) Anmeldenummer: 08841151.7
(22) Anmeldetag: 24.10.2008
(51) Int. Cl.: F16B 13/12, F16B 13/00, F16B 37/00

(54) **DÜBEL MIT STRUKTURIERTEM KLEMMABSCHNITT**
DOWEL WITH A STRUCTURED CLAMPING SECTION
CHEVILLE À SECTION DE SERRAGE STRUCTURÉE

(30) Priorität: 26.10.2007 DE 102007051629
(43) Veröffentlichungstag der Anmeldung: 04.08.2010
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2008/001730
(87) Internationale Veröffentlichungsnummer: WO 2009/052803

(56) Entgegenhaltungen:
- EP-A- 0 264 870
- EP-A- 0 287 505
- DE-U1-202005 017 435
- JP-A- H07 151 126

## Beschreibung

Die Erfindung betrifft einen Dübel zur Befestigung an einem in Stützkernbauweise gefertigten flächigen Bauteil mit mindestens einer Deckplatte und mit einem in dieser Deckplatte zumindest radial klemmenden befestigbaren strukturierten Klemmabschnitt.

Die flächigen Bauteile in Stützkernbauweise werden oft auch als Sandwichplatten, Wabenplatten oder Leichtbauplatten bezeichnet. Alle Plattentypen haben im Möbelbau in der Regel formsteife Decklagen aus Dünnspanplatten, mittel- oder hochdichten Faserplatten, Sperrholz- oder Hartfaserplatten. Die Sandwichplatten haben dabei als Mittelschicht bzw. Stützkern z.B. Polyurethan-Schaum oder Polystyrol. Bei den Wabenplatten werden als Zwischenlagen oft Wellstegeinlagen oder sog. expandierte Honigwaben eingesetzt. Die meisten Leichtbauplatten haben eine Rohdichte, die unter 500 kg/m³ liegt. Werden für die Zwischenlage keine brandhemmenden Aluminiumschäume oder Blähglas verwendet, liegt die Rohdichte unter 350 kg/m³. Zum Vergleich beträgt die Rohdichte einer unbeschichteten Spanplatte ca. 600 bis 750 kg/m³.

Sollen an Leichtbauplatten Beschläge, z.B. durch Anschrauben, befestigt werden, hat man das Problem, dass die Befestigungsmittel in der Regel nur an der relativ dünnen oberen Decklage bzw. Deckplatte Halt finden.

Dazu wird in der nicht vorveröffentlichten
DE 10 2006 049 953 A1 ein Dübel beschrieben, der einen Klemmabschnitt aufweist, der sich in der oberen Deckplatte über eine Querrillung oder eine Längsrillung verklemmt.

Die EP 0 287 505 A1 beschreibt ein Verankerungsteil, das eine Art Klebedübel für Hohlmauerwerk darstellt. Der Klebedübel besteht aus einer Einsatzhülse, die von einer separaten Siebhülse umgeben wird. Zum Setzen des Klebedübels wird die Siebhülse in das Bohrloch gesteckt, um dann mit einer aushärtbaren Masse befüllt zu werden. In die noch weiche Masse wird die Einsatzhülse hineingedrückt. Nach dem Aushärten der Klebemasse kann in die Einsatzhülse eine Befestigungsschraube eingeschraubt werden. Die Klebemasse sorgt für eine stoffschlüssige Verbindung zwischen dem Hohlmauerwerk und den Klebedübelteilen.

Aus der DE 20 2005 017 435 U1 ist ein Dübel bekannt, der für den Einbau in Vollwerkstoffen wie Beton oder Spanplatten vorgesehen ist. Zum Erzielen hoher Auszugkräfte wird speziell der Schaft des Dübels weitergebildet.

Der vorliegenden Erfindung liegt das Problem zugrunde, einen Dübel mit einem Klemmabschnitt für Leichtbauplatten zu entwickeln, dessen Klemmabschnitt bei einfacher Montage fest, sicher und dauerhaft in der Leichtbauplatte hält.

Das Problem wird mit den Merkmalen des Anspruchs 1 gelöst. Die radiale Struktur des Klemmabschnitts weist zwei Zonen auf, wobei die obere, der Außenfläche der Deckplatte nächstgelegene Zone, eine Längsrillung und die untere Zone eine Querrillung hat.

Der erfindungsgemäße Dübel hat einen Klemmabschnitt, der sich nach dem Einsetzen in die Dübelbohrung in der oberen Deckplatte aufgrund seines Übermaßes verklemmt. Er verklemmt sich im außenflächennahen Bereich der oberen Deckplatte mittels einer längsgerillten Kerbverzahnung und im unteren Bereich der Deckplatte z.B. mittels umlaufender, quergerillter Stege. Das Verklemmen reicht aus, um den Dübel verdrehsicher in der Bohrung zu halten. Da zumindest der Klemmabschnitt des Dübels aus einem zähen Werkstoff gefertigt ist, verkrallt sich der Klemmbereich nach dem weiteren Einschrauben oder Einschlagen eines Befestigungsmittels durch eine Klemmbereichsaufdehnung noch mehr.

Weitere Einzelheiten der Erfindung ergeben sich aus den Unteransprüchen und der nachfolgenden Beschreibung einer schematisch dargestellten Ausführungsform.
- Figur 1:: Dimetrische Darstellung des Klemmabschnitts von schräg oben;
- Figur 2:: Klemmabschnitt im Längsschnitt beim Einsetzen in eine Leichtbauplatte;
- Figur 3:: wie Figur 2, jedoch nach dem Einstecken des Klemmabschnitts in die Bohrung der Leichtbauplatte;
- Figur 4:: wie Figur 2, jedoch nach dem Befestigen eines Beschlages.

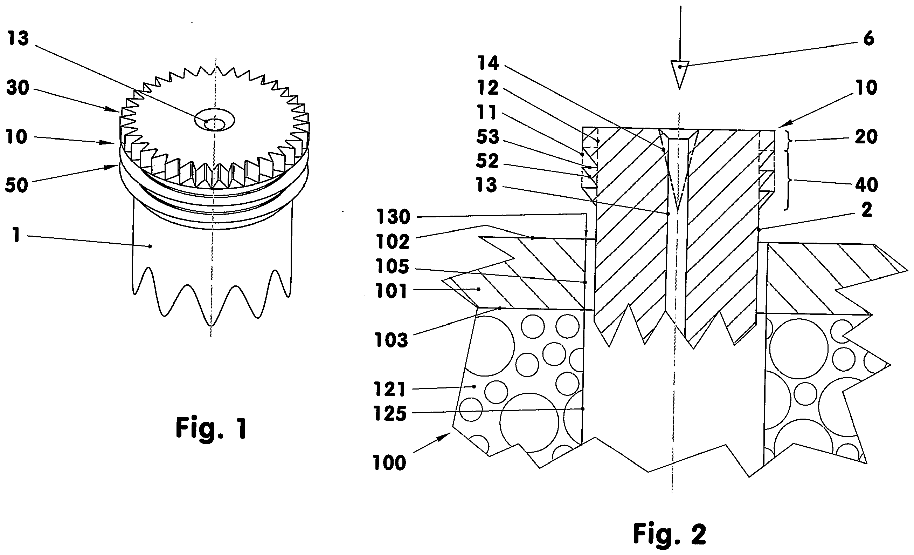

Die Figur 1 zeigt den Klemmabschnitt (10) eines in einer Leichtbauplatte (100), vgl. Figur 2, zu befestigenden Dübels. Der Klemmabschnitt (10) ist der obere Teil eines Dübelgrundkörpers (1), dessen vorderes Ende in der Regel bündig mit der außen liegenden Oberfläche (102) der oberen Deckplatte (101) der Leichtbauplatte (100) abschließt. Der Klemmabschnitt (10), der beispielsweise als Hüllfläche (11) die Form eines Zylinders hat, ist in zwei Zonen (20, 40) unterschiedlicher Strukturen (30, 50) aufgeteilt. Als Hüllfläche (11) wird hier eine Mantelfläche bezeichnet, auf der speziell die Punkte der Strukturen (30, 50) liegen, die von der Mittellinie (5) einen jeweils gleichlangen, maximalen Abstand haben. Der Durchmesser dieser Hüllfläche ist größer als die Bohrung der Leichtbauplatte (100), in die der Dübel eingesetzt wird.

Die in Figur 2 u.a. gezeigte Leichtbauplatte (100) umfasst eine obere Deckplatte (101), eine untere, hier nicht dargestellte Deckplatte und einen zwischen diesen liegenden Stützkern (121). Jede Deckplatte (101) besteht im Ausführungsbeispiel aus einer Dünnspanplatte. Der Stützkern (121) ist hier z.B. ein PU-Schaumkern. Die Deckplatten (101) sind mit ihren innen liegenden Oberflächen (103) mit dem plattenförmigen Stützkern (121) verklebt. Die dargestellte Leichtbauplatte hat z.B. eine Wandstärke von 20 bis 40 Millimetern. Jede Deckplatte ist z.B. 2 bis 8 Millimeter dick. Statt des Schaumkerns kann sie u.a. auch einen Wabenkern haben. In der Leichtbauplatte befindet sich eine Bohrung (130).

Die Leichtbauplatte (100) kann auch gewölbt, z.B. zylindrisch oder sphärisch, ausgeführt sein, sofern die Materialstärke des Stützkerns (121) zumindest annähernd konstant ist.

Um den Dübel montieren zu können wird die erste Deckplatte (101) und der Stützkörper (121) auf- bzw. durchbohrt. Als Bohrwerkzeug wird beispielsweise ein Spiralbohrer benutzt, der einen Spitzenwinkel von 180 Winkelgraden aufweist. Ggf. kann auch ein Stirnsenker verwendet werden. Je nach Dübelbauart kann die Bohrung (130) auch mit einem Stufensenker gebohrt werden. Die entstandene Ausnehmung, bzw. Bohrung (130), wird beispielsweise mit Pressluft freigeblasen oder leergesaugt.

Die Figur 2 zeigt auch den Grundkörper (1) und den Klemmabschnitt (10) des Dübels während des Einsetzens. Der Grundkörper (1), ist hier zylindrisch gestaltet. Er hat nur beispielhaft einen Außendurchmesser, der dem Durchmesser des gedachten Kernzylinders (12) des Klemmabschnitts (10) entspricht. Der Kernzylinder (12) beschreibt eine Fläche, auf der diejenigen Punkte der Strukturen (30, 50) liegen, deren Abstand zur Mittellinie (5) des Dübels minimal sind.

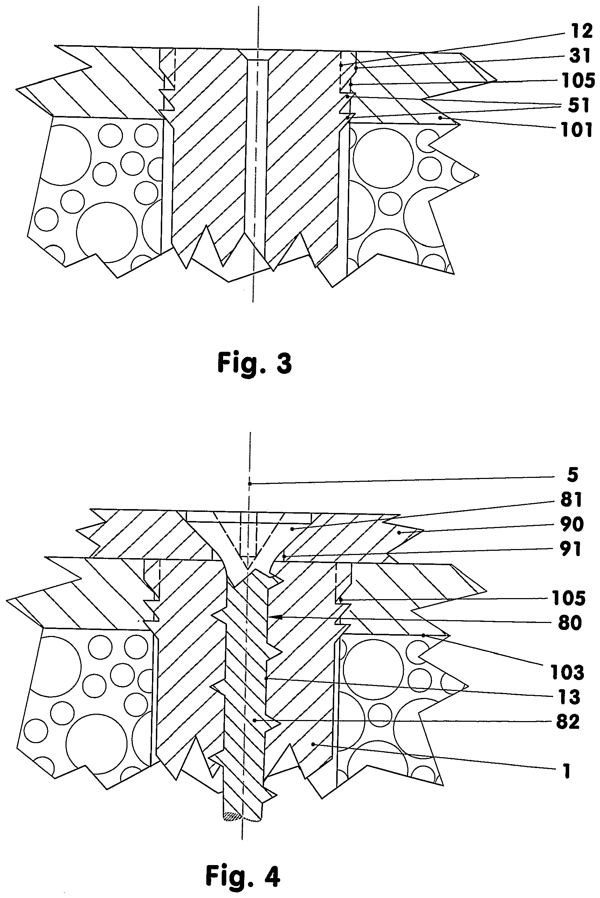

Der Grundkörper (1) hat als zentrale Ausnehmung (13), hier eine zylindrische Bohrung, die am Übergang zur z.B. planen Stirnfläche (21) der Zone (20) eine 45°-Fase, z.B. 0,5 x 45°, aufweist. Die Bohrung (12), in der später ein Befestigungsmittel (80), vgl. Figur 4, eingeschraubt wird, hat einen Durchmesser von 1,3 Millimetern. Im Ausführungsbeispiel dient sie u.a. der Führung des Befestigungsmittels (80), damit dieses beim Einschrauben nicht von der Mittellinie (5) wegwandert.

Selbstverständlich kann die Ausnehmung (13) auch nahezu jeden anderen Querschnitt haben, z.B. einen ovalen, einen polygonalen, einen vieleckigen, einen sternförmigen oder dergleichen. Auch kann die Ausnehmung nur die Form eines kurzen, geraden Kegels (14) haben, vgl. Figur 2, die strichpunktierte Kontur. In diesem Fall muss sich das Befestigungsmittel (80) den größten Teil der haltenden Bohrung selbst erzeugen.

Auch kann die Ausnehmung (13, 14) weggelassen werden oder nur durch einen Markierungspunkt ersetzt werden.

Den vorderen Bereich des Grundkörpers (1) bildet der Klemmabschnitt (10). Die erste Zone (20) dieses Klemmabschnitts (10) hat als Struktur (30) eine Längsrillung. Diese Längsrillung (30) ist eine Art Kerbverzahnung mit geraden, z.B. spitz zulaufenden Zähnen (31). Im Ausführungsbeispiel beträgt die Zahnbreite z.B. 1 Millimeter. Die Zahnfußbreite misst ca. 0,7 Millimeter. In Figur 1 hat die Längsrillung (30) 36 Zähne. Die Profilwinkel der linken und rechten Zahnflanken sind gleich groß. Je nach Ausführungsform schwankt die Zähnezahl zwischen 15 und 50 Zähnen. Die Kerbverzahnung hat eine konstante Teilung.

Alternativ kann die Struktur (30) auch eine Aneinanderreihung von z.B. halbkugelförmigen Noppen sein.

Die zweite Zone (40) des Klemmabschnitts (10) hat als Struktur (50) eine Querrillung. Die Querrillung besteht aus zwei bis vier umlaufenden Stegen (51). Beispielsweise haben alle Stege (51) den gleichen Querschnitt und die gleiche Querschnittsform. Auch sind die Stege (51) jeweils gleich weit voneinander entfernt.

Jeder Steg (51) hat eine Gleit- (52) und eine Sperrflanke (53). Die erste Gleitflanke (52) schließt sich direkt an die zylindrische Wandung (2) des Grundkörpers (1) an. Sie hat die Gestalt eines geraden Kegelstumpfmantels, dessen gedachte Spitze auf der Mittellinie (5) - nach Figur 2 - unterhalb des Klemmabschnitts (10) liegt. Der Kegelwinkel des Kegelstumpfmantels beträgt hier 80 Winkelgrade.

An der Rückseite der Gleitflanke (52) schließt sich die z.B. ebene Sperrflanke (53) an. Die Normale der Ebene der Sperrflanke (53) verläuft parallel zur Mittellinie (5). Ggf. kann auch die Gleitflanke (52) die Form eines Kegelstumpfmantels haben, wobei die gedachte Spitze des Kegelstumpfmantels jeweils ober- oder unterhalb der vorgenannten Ebene liegen kann. Die gemeinsame Schnittkante von Gleitflanke (52) und Sperrflanke (53) liegt auf der Hüllfläche (11).

Der letzte Steg (51), also der, der sich direkt an die Längsrillung (30) anschließt, geht direkt in die Längsrillung (30) über. Die Sperrflanke (53) dieses Steges existiert nur in den Zahnlücken der Längsrillung (30).

Im Ausführungsbeispiel ist der Durchmesser der Hüllfläche (11) um 0,5 Millimeter größer als der Innendurchmesser der Bohrung (105), vgl. Figur 2. Wird der Grundkörper (1) in die Bohrung (130) eingeschoben und der Klemmabschnitt (10) in die Bohrung (105) eingepresst, so verkrallen sich die Stege (51) in den unteren Schichten der Deckplatte (101), während sich die Zähne der Längsrillung (30) in der in der Regel härteren Oberflächenschicht der Deckplatte (101) einkerben, vgl. Figur 3. Der Kernzylinder (12) hat hier einen kleineren Durchmesser als die Bohrung (105). Trotzdem reicht das hier erzielte Einkerben als erste Verdrehsicherung.

Die Zähne (31) und/oder die Stege (51) können, z.B. durch chemische Behandlung, einen größeren E-Modul haben als das zähelastische Kernmaterial des Klemmabschnitts (10).

Die Stirnseite (21) des Klemmabschnitts (10) liegt im Ausführungsbeispiel zumindest annähernd in der Ebene der außen liegenden Deckplattenoberfläche (102).

In Figur 4 wird der Grundkörper (1) und der Klemmabschnitt (10) mit befestigtem Beschlag (90) gezeigt. Der Beschlag (90), der mit einer Spanplattenschraube (80) im Dübel fixiert ist, hat eine Bohrung (91) mit einer Senkschraubensenkung. In der Bohrung (91) sitzt der Kopf (81) der Spanplattenschraube (80). Der Schaft (82) der Spanplattenschraube (80) sitzt in der nun auf mindestens den doppelten Durchmesser aufgeweiteten Bohrung (13) des Grundkörpers (1). Durch die Aufweitung des zähelastischen Dübelwerkstoffes, es ist z.B. ABS, PE oder PP, dessen E-Modul kleiner als 2000 N/mm² ist, vergrößert sich zumindest der Durchmesser des Kernzylinders (12). Die Längs- (30) und Querrillung (50) gräbt sich noch tiefer in die Bohrung (105) ein. Ggf. hintergreift hierbei der untere Bereich der zweiten Zone (40) die innen liegende Oberfläche (103) der Deckplatte (101).

### Bezugszeichenliste:

- 1: Grundkörper des Dübels
- 2: Wandung des Grundkörpers
- 5: Mittellinie des Dübels
- 6: Dübelsetzrichtung

- 10: Klemmabschnitt
- 11: Hüllfläche
- 12: Kernzylinder
- 13: Ausnehmung, zentral
- 14: Ausnehmung, kegelförmig

- 20: Zone, eins
- 21: Stirnfläche

- 30: Längsrillung, Kerbverzahnung, Struktur
- 31: Zähne

- 40: Zone, zwei

- 50: Querrillung, Struktur
- 51: Stege
- 52: Gleitflanken
- 53: Sperrflanken

- 80: Befestigungsmittel, Spanplattenschraube
- 81: Schraubenkopf, Kopf
- 82: Schaft

- 90: Beschlag
- 91: Bohrung
- 100: Sandwichplatte, Leichtkern-Verbundplatte; flächiges Bauteil in Stützkernbauweise
- 101: Deckplatte, oben
- 102: außen liegende Oberfläche
- 103: innen liegende Oberfläche
- 105: Bohrung

- 121: Stützkern, Wabenkern, Schaumstoffkern
- 125: Bohrung

- 130: Gesamtbohrung, Ausnehmung

## Patentansprüche

1. Dübel zur Befestigung an einem in Stützkernbauweise gefertigten flächigen Bauteil (100) mit mindestens einer Deckplatte (101) und mit einem in dieser Deckplatte (101) zumindest radial klemmenden befestigbaren strukturierten Klemmabschnitt (10), **dadurch gekennzeichnet,**
- **dass** die radiale Struktur des Klemmabschnitts (10) zwei Zonen (20, 40) aufweist, wobei die obere, der Außenfläche der Deckplatte nächstgelegene Zone (20), eine Längsrillung (30) und die untere Zone (40) eine Querrillung (50) hat.

2. Dübel gemäß Anspruch 1, **dadurch gekennzeichnet, dass** der Klemmabschnitt (10) aus einem zähen Werkstoff gefertigt ist,

3. Dübel gemäß Anspruch 1, **dadurch gekennzeichnet, dass** zumindest der Werkstoff des Klemmabschnitts (10) einen E-Modul aufweist, der kleiner als 2000 N/mm² ist.

4. Dübel gemäß Anspruch 1, **dadurch gekennzeichnet, dass** der Klemmabschnitt (10) eine zumindest annähernd zentrale Ausnehmung (13, 14) aufweist, deren mittlerer Durchmesser kleiner ist als der halbe Kerndurchmesser des im Dübel - in der Ausnehmung (13, 14) - einzusetzenden Befestigungsmittels (80),

5. Dübel gemäß Anspruch 1, **dadurch gekennzeichnet, dass** die Länge des Klemmabschnitts (10) gleich lang oder größer ist als die Wandstärke der Deckplatte (101).

6. Dübel gemäß Anspruch 1, **dadurch gekennzeichnet, dass** die Länge der Längsrillung (30) des Klemmabschnitts (10) - parallel zur Dübelmittellinie (5) gemessen- mindestens einem Viertel der Wandstärke der Deckplatte (101) entspricht, jedoch nicht kürzer als 0,5 Millimeter ist.

7. Dübel gemäß Anspruch 1, **dadurch gekennzeichnet, dass** der Klemmabschnitt eine plane Stirnfläche (21) aufweist.

8. Dübel gemäß Anspruch 1, **dadurch gekennzeichnet, dass** die Längsrillung (30) eine Kerbverzahnung ist, deren einzelne Zähne (31) eine Zahnfußbreite von mindestens 0,6 Millimeter haben.

9. Dübel gemäß Anspruch 8, **dadurch gekennzeichnet, dass** die einzelnen Zähne (31) der Längsrillung (30) jeweils eine Zahnhöhe von mindestens 0,6 Millimeter haben.

10. Dübel gemäß Anspruch 1, **dadurch gekennzeichnet, dass** die Querrillung (50) aus mindestens zwei umlaufenden Stegen (51) besteht, wobei jeder Steg (51) eine Gleitflanke (52) und eine Sperrflanke (53) aufweist.

11. Dübel gemäß Anspruch 10, **dadurch gekennzeichnet, dass** die Sperrflanken (53) der Stege (51) jeweils eine zur Dübelmittellinie (5) normale Ebene bilden.

12. Dübel gemäß Anspruch 10, **dadurch gekennzeichnet, dass** die Gleitflanken (52) der Stege (51) jeweils eine Kegelstumpfmantelfläche bilden, deren gedachte Spitzen auf der Dübe1-mittellinie (5) liegen und einen Kegelwinkel von mindestens 70 Winkelgraden aufweisen.

13. Dübel gemäß Anspruch 12, **dadurch gekennzeichnet, dass** die gedachten Spitzen der Kegelstumpfmantelflächen der Gleitflanken (52) in Dübelsetzrichtung (6) vor dem Klemmabschnitt (10) liegen.

## Claims

1. An anchor for securing in a planar component (100) made in a supporting-core method of construction, the planar component comprising at least one cover panel (101), with a structured clamping section (10) adapted to be secured in cover panel (101) by being at least radially clamped thereinto, **characterized in that**
- the radial structure of the clamping section (10) comprises two zones (20, 40), with the upper zone (20) adjoining the outer side of said cover panel having longitudinal grooves (30) thereon and the lower zone (40) having transverse grooves (50) thereon.

2. Anchor as claimed in claim 1, **characterized by** the clamping section (10) being made of a tough material.

3. Anchor as claimed in claim 1, **characterized in that** Young's modulus of at least the clamping section (10) material is lower than 2000 N/mm².

4. Anchor as claimed in claim 1, **characterized in that** the clamping section (10) has therein a recess (13, 14) at least approximately centrally located of which the average diameter is smaller than one half the core diameter of a fastener (80) to be introduced in the recess (13, 14) of said anchor.

5. Anchor as claimed in claim 1, **characterized in that** the clamping section (10) has a length equal to or greater than the wall thickness of the cover panel (101).

6. Anchor as claimed in claim 1, **characterized in that** the length of the longitudinal grooves (30) on clamping section (10) corresponds to at least one quarter of the thickness of the cover panel (10), but is not shorter than 0,5 mm, measured in parallel to the center line (5) of said anchor.

7. Anchor as claimed in claim 1, **characterized in that** the clamping section has a planar end face (21).

8. Anchor as claimed in claim 1, **characterized in that** the longitudinal grooves (30) constitute serrated splines of which the individual serrations (31) are at least 0,6 mm wide at the bottom.

9. Anchor as claimed in claim 8, **characterized in** the individual teeth (31) of the longitudinal serrations (30) each are at least 0,6 mm high.

10. Anchor as claimed in claim 1, **characterized in that** the transverse grooves (50) consist of at least two annular ridges (51), with said ridges (51) each having a sliding flank (52) and a blocking flank (53).

11. Anchor as claimed in claim 10, **characterized in that** the blocking flank faces (53) of the ridges (51) form a plane normal to the center line (5) of the anchor.

12. Anchor as claimed in claim 10, **characterized in that** the sliding flanks (52) of the ridges (51) each form a frustroconical envelope surface of which the imaginary apex lies on the center line (5) of the anchor, defining a cone angle of a least 70 degrees.

13. Anchor as claimed in claim 12, **characterized in that** said imaginary apexes of the frustroconical envelope surfaces of the slide flanks (52) lie in front of the clamping section (10) in the direction (6) of anchor placement.

## Revendications

1. Cheville destinée à être fixée dans des éléments plans de construction sandwich (100), composés d'au moins une plaque de recouvrement (101) et une section de blocage (10) structurée qui peut être fixée dans cette plaque de recouvrement (101) de façon à être bloquée au moins radialement, **caractérisée en ce**
- **que** la structure radiale de la section de blocage (10) présente deux zones (20, 40), la zone supérieure (20) qui est proche de la surface extérieure de la plaque de recouvrement ayant une rainure longitudinale (30) et la zone inférieure (40) ayant une rainure transversale (50).

2. Cheville selon la revendication 1, **caractérisée en ce que** la section de blocage (10) est fabriquée à partir d'un matériau résistant.

3. Cheville selon la revendication 1, **caractérisée en ce qu'**au moins le matériau de la section de blocage (10) présente un module d'élasticité inférieure à 2000 N/mm².

4. Cheville selon la revendication 1, **caractérisée en ce que** la section de blocage (10) présente un évidement (13, 14) au moins approximativement central dont le diamètre moyen est plus petit que le demi-diamètre du noyau du moyen de fixation (80) à placer dans l'évidement (13, 14) de la cheville.

5. Cheville selon la revendication 1, **caractérisée en ce que** la longueur de la section de blocage (10) est égale ou supérieure à l'épaisseur de la paroi de la plaque de recouvrement (101).

6. Cheville selon la revendication 1, **caractérisée en ce que** la longueur de la rainure longitudinale (30) de la section de blocage (10) - mesurée parallèlement à l'axe central de la cheville (5) - correspond au moins au quart de l'épaisseur de la paroi de la plaque de recouvrement (101) sans toutefois être inférieure à 0,5 millimètres.

7. Cheville selon la revendication 1, **caractérisée en ce que** la section de blocage présente une face frontale plane (21).

8. Cheville selon la revendication 1, **caractérisée en ce que** la rainure longitudinale (30) est une denture cannelée dont les dents (31) ont une largeur de pied de dent d'au moins 0,6 millimètres.

9. Cheville selon la revendication 8, **caractérisée en ce que** les dents (31) de la rainure longitudinale (30) ont chacun une hauteur d'au moins 0,6 millimètres.

10. Cheville selon la revendication 1, caractérisée en que la rainure transversale (50) est composée d'au moins deux nervures périphériques (51), chaque nervure présentant un flanc de glissement (52) et un flanc d'arrêt (53).

11. Cheville selon la revendication 10, caractérisée en que les flancs d'arrêt (53) des nervures (51) forment chacun un plan normal par rapport à l'axe central (5) de la cheville.

12. Cheville selon la revendication 10, caractérisée en que les flancs de glissement (52) des nervures (51) forment chacun une surface d'enveloppe tronconique dont les pointes imaginaires se trouvent sur l'axe central de la cheville (5) et forment un angle de cône d'au moins 70 degrés.

13. Cheville selon la revendication 12, caractérisée en que les pointes imaginaires des surfaces d'enveloppe tronconique des flancs de glissement (52) se trouvent devant la section de blocage (10) dans la direction de pose de la cheville (6).
